# EUROPEAN PATENT APPLICATION

(11) **EP 2 191 887 A1**
(43) Date of publication of application: **02.06.2010**
(21) Application number: 08169978.7
(22) Date of filing: 26.11.2008
(51) Int. Cl.: B01D 69/12, B01D 71/56, B01D 67/00, C08G 69/28

(54) **Clickable thin film composite polyamide membranes**

(71) Applicant: Polymers CRC Limited, Notting Hill, VIC 3168 (AU)
(72) Inventor: The designation of the inventor has not yet been filed
(74) Representative: Upschulte, Manfred Alois

(57) **Abstract**

The present invention relates to the preparation of clickable thin film composite (TFC) polyamide membranes, i.e. either azide functionalized, alkyne functionalized or both, that allow a very simple and easy surface modification of the membrane via click chemistry. Further aspects of the invention are such membranes per se, a process for the subsequent modification of the thin film composite polyamide membrane surface using click chemistry to yield membranes having new chemical and physical properties, e.g. antifouling and/or antibacterial properties.

## Description

The present invention relates to the preparation of clickable thin film composite (TFC) polyamide membranes, i.e. either azide functionalized, alkyne functionalized or both, that allow a very simple and easy surface modification of the membrane via click chemistry. Further aspects of the invention are such membranes per se, a process for the subsequent modification of the thin film composite polyamide membrane surface using click chemistry to yield membranes having new chemical and physical properties, e.g. antifouling and/or antibacterial properties.

In a continuous effort to improve the properties and performances of thin film composite (TFC) polyamide membranes - nowadays widely accepted as the system of choice for reverse osmosis (RO) applications - especially regarding the fouling phenomenon that remains their major drawback, surface modification of the membranes has been investigated over the last decade. The surface modification methods are ranging from simple physical adsorption/coating to chemical bond formation, the latest one being preferable considering the long-term effect. Moreover, a key aspect of the low fouling ability of films is the high density of anti-fouling polymers chains onto the surface. Therefore, an efficient process that would allow reaching high grafting density of polymers chains onto the surface and relying on an easy set up is highly desirable for such purposes.

A suitable method to prepare thin film composite (TFC) polyamide membranes is interfacial polymerization, which is copolymerization of two reactive monomers dissolved in two immiscible solutions respectively. The monomers can meet and react only at the interface of the solutions when two solutions are contained in a reaction chamber. As the reaction continues, polymer film is formed at the interface. The film is usually very thin because the growing interfacial polymer behaves as a barrier to diffusion of the two monomers, and the polymerization levels off at a limiting thickness, typically of the order of a micrometer or less. To provide durability to the fragile films, the interfacial polymerization was frequently carried out at the surface of a microporous substrate, in which case the result is called a thin-film composite membrane (TFC). This is for example described by Wamser et al., J. Am. Chem. Soc. 111, 1989, 8485-8491.

The current worldwide expansion and diverse application of Reverse Osmosis (RO) technology has resulted from the introduction of thin-film-composite (TFC) membranes by interfacial polymerization. Most commercial TFC membranes are aromatic polyamides or their derivatives. It is well known that aromatic polyamide composite membranes have excellent salt rejection and water flux, and they are applicable in a wide range of water purification applications.

However, fouling is currently one of the major remaining problems for aromatic polyamide RO membranes. Fouling causes deterioration of the membrane performance and shortens membrane life, limiting further application of RO membrane technology. It is thus desirable to improve the surface properties of RO membranes without impairing their transport characteristics in order to enhance their resistance to fouling. There is obviously a need for a process which allows the surface modification of TFC polyamide membranes to overcome these problems.

The newly identified click chemistry gathers a set of powerful and selective reactions that require only benign reaction conditions and simple workup and purification procedures. Click reactions are, for example, described by Sharpless et al. in Angewandte Chemie International Edition 41, 2596-2599, 2002. Among the number of reactions that meet the criteria for click chemistry identified by Sharpless and co-workers, the Cul-catalyzed variant of the Huisgen 1,3-dipolar cycloaddition of azides and alkynes to afford 1,2,3-triazoles is one of the most powerful discovered to date. The ease with which azides and alkynes can be introduced into a molecule and their relative stability under a variety of conditions contribute to the usefulness of this reaction. Indeed azides and alkynes are essentially inert to most biological and organic conditions, including highly functionalized biological molecules, molecular oxygen, water, and the majority of common reaction conditions in organic synthesis.

The high tolerance (over a wide range of pH values, temperature and solvent systems), selectivity and fidelity of click chemistry make it a process that can be adapted with a wide range of chemicals and reaction media and therefore a versatile and tunable approach for grafting anti-fouling polymers or biologically active molecules onto membrane surface.

The present invention relates to the preparation of clickable TFC polyamide membranes, i.e. either azide functionalized, alkyne functionalized or both, that allow a very simple and easy surface modification of the membrane via click chemistry. The present invention is based on the introduction of azide or/and alkyne functional groups to the membrane surface, directly during the preparation of the TFC polyamide membrane by interfacial condensation polymerization on a microporous substrate, according to the general procedure reported in US 4,277,344. The presence of azide or/and alkyne functional groups onto the membrane surface allows for further chemical coupling between alkyne end-functionalized or/and azide end-functionalized anti-fouling polymers and the functionalized membrane.

The present invention provides a very simple and easy method for the surface modification of TFC polyamide membranes and the enhancement of their properties, especially regarding fouling problems. Indeed, a simple dipping process into a solution of the appropriate functionalized anti-fouling polymer can be performed in order to achieve click coupling between the membrane surface and the polymer.

One aspect of the invention is a method for the preparation of a functionalized thin film composite polyamide membrane on a microporous substrate comprising carrying out on the microporous substrate a polycondensation reaction of
a) an aromatic amine with at least two amine functionalities; with
b) an aromatic acyl halide with at least 3 -C(O)Cl groups; and
c1) an additional aromatic amine with at least two amine functionalities which carries at least one azide (N₃) substituent or/and
c2) an additional aromatic amine with at least two amine functionalities which carries at least one alkyne substituent; or
d1) an additional aromatic acyl halide with at least 2 -C(O)Cl groups which carries at least one azide (N₃) substituent or/and
d2) an additional aromatic acyl halide with at least 2 -C(O)Cl groups which carries at least one alkyne substituent.

In a specific embodiment the method for the preparation of a functionalized thin film composite polyamide membrane on a microporous substrate comprises carrying out on the microporous substrate a polycondensation reaction of
a) an aromatic amine with at least two amine functionalities; with
b) an aromatic acyl halide with at least 3 -C(O)Cl groups; and
d1) an additional aromatic acyl halide with at least 2 -C(O)Cl groups which carries at least one azide (N₃) substituent or/and
d2) an additional aromatic acyl halide with at least 2 -C(O)Cl groups which carries at least one alkyne substituent.

The term "polymer" or "copolymer" as used herein includes oligomers and polymers cooligomers and copolymers with (units)ₙ. The upper limit of an "n" will be defined by the particular characteristics of the polymer chain.

The microporous substrate may be of inorganic or organic nature. As inorganic materials there come into consideration microporous silica in the form of thin films or, for example, zeolite.

The microporous substrate comprises polymeric material containing pore sizes which are sufficient to permit the passage of permeate but are not large enough so as to interfere with the bridging over of the resulting functionalized TFC polyamide film.

Typically the pore size range may be 0.01-5 micrometers, preferably 0.1-1 micrometer, measured by SEM.

Preferably the microporous substrate is a polymer selected from the group consisting of a polysulfone, polycarbonate, polypropylene, polyamide and poly(ether sulfone).

Preferably the aromatic amine compound is of low molecular weight and soluble in water. The amine functional group is preferably primary rather than secondary and less (in number) than the functionality of the acyl halide compound. Preferably the aromatic acyl halide compound has at least three or more acyl chloride functionalities and should be soluble in a non-polar solvent.

A non-polar solvent is a solvent that is considerably less polar than the typical polar solvents, such as water, C₁-C₃ alkanols, ammonia and the like and for instance less than 5 weight-percent soluble in water at 20°C. Typical examples are C₁-C₁₂ aliphatic hydrocarbons such as pentane, hexanes, heptanes, octanes; cycloalkanes, for example cyclohexane.

Under azide substituent there is understood the -N₃ substituent.

Under alkyne substituent there is understood a C₂-C₈alkynil substituent, preferably

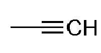

When the aromatic amine or the aromatic acyl halide contain either an azide substituent or alkyne substituent, each component may carry up to two of the respective substituents, preferably they carry one.

Preferred is a method for the preparation of a functionalized thin film composite polyamide membrane on a microporous substrate, which comprises carrying out on the microporous substrate a polycondensation reaction of
a) an aromatic amine of formula (I) 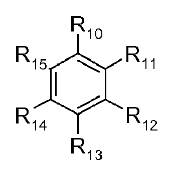 wherein at least two of R₁₀ - R₁₅ are -NH₂ and the others are independently hydrogen or C₁-C₄alkyl; with
b) an aromatic acyl halide of formula (II) 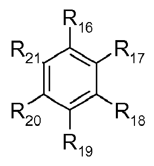 wherein at least 3 of R₁₆ -R₂₁ are a group -C(O)Cl and the others are independently hydrogen or C₁-C₄alkyl; in the presence of
d1) an azide-functionalized acyl chloride monomer of formula (III) 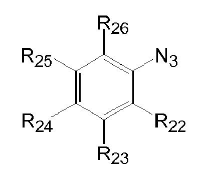 or/and
d2) an alkyne-functionalized acyl chloride monomer of formula (IV) 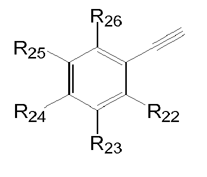 wherein at least 2 of R₂₂ -R₂₆ are a group -C(O)Cl and the others are independently hydrogen or C₁-C₄alkyl.

C₁-C₄alkyl means methyl, ethyl, propyl or butyl, which may be linear or branched where appropriate.

Individual alkyne functionalized or azide fuctionalized aromatic acyl chlorides are:
5-(Azidomethyl)isophthaloyl dichloride 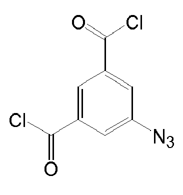 ; or
5-(Ethynyl)isophthaloyl dichloride

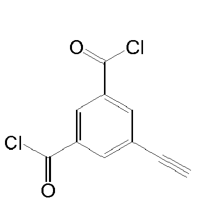

The polycondensation reaction may be carried out in any convenient solvent, which does not interact with the reagents. A convenient way to carry out the polycondensation reaction and to prepare the clickable polyamide membrane is by:
a) the preparation of an aqueous solution containing the aromatic amine;
b) the preparation of an organic solution containing a mixture of the aromatic acyl halide and the azide-functionalized acid chloride or alkyne-functionalized acid chloride dissolved in a "non polar solvent";
c) soaking the microporous substrate in the aqueous solution containing the aromatic amine;
d) pouring the organic solution (aromatic acyl halide + azide-functionalized acid chloride or alkyne-functionalized acid chloride) on the soaked microporous surface;
e) allowing the reaction at the interface between the solutions, at room temperature for 10 seconds.

When a functionalized amine component is used, the process can be adapted accordingly.

Typically, the concentration of the aromatic amine in the aqueous solution is of 2% in weight and the concentration of the acid chloride compounds (aromatic acyl halide + azide/alkyne-functionalized acid chloride) in the organic solution is of 0.01% in weight. Typically the weight ratio between the aromatic acyl halide with at least 3 -C(O)Cl groups and the azide/alkyne-functionalized acid chloride is from 1:1 to 9:1.

When both functionalities are present the weight ratio refers to the sum of both.

When the polycondensation is carried out using a functionalized aromatic amine instead of the functionalized acyl halide, the weight ratio of the aromatic amine with at least two amine functionalities (component a) to alkyne functionalized and/or azide functionalized amine is from 1:1 to 9:1.

The polycondensation reaction is, for example, carried out at a temperature from 5°C to 40°C, preferably at a temperature between 15°C and 25°C at normal pressure. The reaction time can vary in a wide range, typically between 1 second and 60 minutes, preferably between 1 second and 60 seconds.

The obtained film should be dried with a hot air flow or under ambient conditions and washed thoroughly with distilled water to eliminate some secondary products formed by competing reactions (aminolysis) and to remove excess reagents.
The "nonpolar solvent" may be aliphatic liquids such as pentane, hexanes, heptanes, octanes, cycloalkanes such as cyclohexane, preferably hexanes.

Preparation methods and use of thin film composite membranes are principally known and, for example described by R. J. Petersen in Journal of Membrane Science 83 (1993) 81-150.

The subsequent modification of the thin film composite polyamide membrane surface using click chemistry yields membranes having new chemical and physical properties, e.g. antifouling and/or antibacterial properties.

A further aspect of the invention is a method for the modification of a functionalized thin film composite polyamide membrane on a microporous substrate as described above comprising using a click coupling reaction.

Preferred for the click coupling reaction are polymers with anti-fouling properties or biologically active molecules, end-functionalized with either an azide or an alkyne function.

Particularly preferred is alkyne functionalized poly(ethylene glycol) PEG of molecular weight in the range 2,000 to 5,000 Da.

Typically a simple dipping process into a solution of the appropriate functionalized anti-fouling polymer is performed in order to achieve click coupling between the membrane surface and the polymer.

Preferred is a process wherein the clickable membrane (2 cm² of membrane per 3 mL of solution) is immersed in an aqueous solution of the appropriate functionalized anti-fouling polymer, at a concentration 1.10⁻² to 1.10⁻³ mol.L⁻¹, preferably 8.10⁻³ mol.L⁻¹, under sub-cloud point grafting conditions (Biomaterials 23 (2002) 2043-2056), e.g. appropriate temperature and ionic strength (depending on the nature of the polymer clicked).

The click coupling reaction between the membrane and PEG is carried out at a temperature from 20°C to 60°C, preferably at a temperature of 60°C and preferably using a K₂SO₄ saturated aqueous solution. The reaction time can vary in a wide range, typically between 1 hour and 24 hours, preferably between 1 hour and 5 hours. The reaction is typically carried out at atmospheric pressure.

A further aspect of the invention is a functionalized thin film composite polyamide membrane on a microporous substrate comprising on the microporous substrate a polycondensate prepared from
a) an aromatic amine with at least two amine functionalities; with
b) an aromatic acyl halide with at least 3 -C(O)Cl groups; and
c1) an additional aromatic amine with at least two amine functionalities which carries at least one azide (N₃) substituent or/and
c2) an additional aromatic amine with at least two amine functionalities which carries at least one alkyne substituent; or
d1) an additional aromatic acyl halide with at least 2 -C(O)Cl groups which carries at least one azide (N₃) substituent or/and
d2) an additional aromatic acyl halide with at least 2 -C(O)Cl groups which carries at least one alkyne substituent.

Preferably the functionalized thin film composite polyamide membrane on a microporous substrate comprises on the microporous substrate a polycondensate prepared from
a) an aromatic amine with at least two amine functionalities; with
b) an aromatic acyl halide with at least 3 -C(O)Cl groups; and
d1) an additional aromatic acyl halide with at least 2 -C(O)Cl groups which carries at least one azide (N₃) substituent or/and
d2) an additional aromatic acyl halide with at least 2 -C(O)Cl groups which carries at least one alkyne substituent.

Also an aspect of the invention is a modified functionalized thin film composite polyamide membrane on a microporous substrate prepared by a click coupling reaction from the membrane as described above.

The modified membranes of the instant invention are particularly useful for Reverse-Osmosis purposes.

The definitions and preferences given above apply equally for all aspects of the invention.

The following examples illustrate the invention.

### Materials and Methods

Microporous polysulfone (PSU) substrates (Tuffryn® membrane filter HT-450) are used as received. Microporous poly(ether sulfone) (PES) substrates are prepared by typical nonsolvent phase inversion method as outlined in Example 1. Reagent grade chemicals are used as received. 5-(Azidomethyl)isophtaloyl dichloride is prepared as outlined in Example 2. The synthetic route for 5-(Azidomethyl)isophtaloyl dichloride is adapted from procedures reported in WO 07/002313 and JACS 1999, 121, 10286-10296. Alkynyl end-capped poly(ethylene glycol) (PEG) of different molecular weight (620, 2240, 5140 Da) are prepared by an esterification reaction between commercial hydroxyl end functionalized PEG (either PEG methacrylate or PEG methyl ether) and 5-hexynoic acid, according to the procedure described in Macromolecules 40 (2007) 824-831.

Interfacial polymerization reactions are performed at room temperature. Trimesoyl chloride, m-phenylene diamine and hexane are used as received. Water is distilled before use.

¹H NMR and ¹³C NMR spectra are recorded on a 300 MHz Bruker ACF300 spectrometer. Chemical shifts are quoted relative to (external) tetramethylsilane (TMS).

Fourier Transform Infrared - Attenuated Total Reflectance (FTIR-ATR) measurements are performed using a Bruker IFS66\S Fourier transform spectrometer equipped with a tungsten halogen lamp, a KBr beam splitter and DTGS detector.

X-Ray Photoelectron Spectroscopy (XPS) is performed with a Kratos AXIS Ultra DLD spectrometer, using monochromatic AlK_{α} radiation (hv = 1486.7 eV). The system is equipped with a magnetically confined charge compensation system. Spectra are recorded using an acceleration voltage of 15 keV at a power of 225 W. Survey spectra are collected with a pass energy of 160 eV and an analysis area of 300 × 700 µm. High-resolution spectra are obtained using a 20 eV pass energy and an analysis area of 300 × 700 µm.

**Example 1: Synthesis of the microporous poly(ether sulfone) (PES) microporous substrates.** Poly(ether sulfone) (PES, Ultra son E6020P (BASF) is dried at 120°C for 24 h prior to use ) (14 g) is dissolved in n-dimethyl pyrrolidone (NMP) (51 g) at 60 °C for 2 hours. Polyethylene glycol-400 (34 g) is added to the mixture and stirred for 1 hour. After obtaining homogeneous solution, the casting solution is left overnight to allow complete release of bubbles. The solution is cast onto a glass plate with a steel Gardner knife at a wet thickness of 200 µm and immersed in a coagulation bath of milli-Q water. The formed membranes are peeled off and subsequently washed with copious amount of water to remove solvents and other organic residues.

### Example 2: Synthesis of Azide-functionalized acid chloride monomer III.

**Preparation of diethyl 5-(azidomethyl)isophtalate.** To a solution of diethyl 5-(hydroxymethyl)isophtalate (1 g, 3.96 mmol) and diphenylphosphoryl azide (1.3 g, 4.72 mmol) in toluene (10 mL) at 0°C, 1,8-diazabicyclo[5.4.0]undec-7-ene (0.65 mL, 4.34 mmol) is added. The reaction mixture is warmed to room temperature and stirred overnight. It is then washed with water (2 × 10 mL) and 10% citric acid aqueous solution (10 mL). The organic layer is dried over sodium sulfate (Na2SO4), filtered and concentrated in vacuo. The crude product is purified by flash column chromatography (1:4 ethyl acetate / hexane) to yield white crystalline (0.88 g, 80%). δ_{H} (300 MHz, CDCl₃, 298 K) = 8.63 (s, 1H, CH), 8.17 (s, 2H, CH-C-CH₂N₃), 4.47 (s, 2H, CH₂N₃), 4.41 (qd, 4H, OCH₂CH₃), 1.41 (t, 6H, OCH2CH₃). δ_{C} (75 MHz, CDCl₃, 298 K) = 165.3 (2C, COOCH₂CH₃), 136.3 (1 C, C*-*CH₂N₃), 133.0 (2C, CH-C-CH₂N₃), 131.5 (2C, C-CO), 130.3 (1C, CH), 61.4 (2C, OCH₂CH₃), 53.8 (1C, CH₂-N₃), 14.2 (2C, OCH₂CH₃).

**Preparation of 5-(azidomethyl)isophtalic acid.** Diethyl 5-(azidomethyl)isophtalate (0.85 g, 3 mmol) is dissolved in 1 M methanolic KOH (25 mL), and the resulting solution is refluxed for 1 h. Solvent is removed under reduced pressure, and the residue is dissolved in water (75 mL) and acidified with concentrated HCl to pH 2 to give a milky suspension. The suspension is extracted with ethyl acetate (3 × 50 mL), and the combined organic washes are dried over Na₂SO₄, filtered and concentrated in vacuo to yield a slightly yellowish powder (0.61 g, 90%). δ_{H} (300 MHz, acetone-*d*6, 298 K) = 8.61 (s, 1H, CH), 8.24 (s, 2H, CH-C-CH₂N₃), 4.67 (s, 2H, CH₂N₃). δ_{C} (75 MHz, acetone-*d*6, 298 K) = 165.5 (2C, COOH), 137.5 (1C, C-CH₂N₃), 133.2 (2C, CH-C-CH₂N₃), 131.5 (2C, C-CO), 130.0 (1 C, CH), 53.1 (1 C, CH₂-N₃).

**Preparation of 5-(azidomethyl)isophthaloyl dichloride (III).** 5-(Azidomethyl) isophtalic acid (0.3 g, 1.35 mmol) is suspended in thionyl chloride (SOCl₂) (2 mL). The solution is heated to reflux for one hour. After one hour (from complete solubilization), the mixture is allowed to cool down for 20 minutes then the excess of thionyl chloride is removed under reduced pressure to yield a yellow oil (0.25 g, 71%).The final product is stored in the fridge in a well sealed opaque vial. δ_{H} (300 MHz, CDCl₃, 298 K) = 8.80 (s, 1H, CH), 8.35 (s, 2H, CH-C-CH₂N₃), 4.60 (s, 2H, CH₂N₃). δ_{C} (75 MHz, CDCl3, 298 K) = 166.8 (2C, COCl), 138.5 (1C, C-CH₂N₃), 135.7 (2C, CH-C-CH₂N₃), 134.9 (2C, C-CO), 133.1 (1 C, CH), 53.2 (1 C, CH₂-N₃).

### Example 3: Synthesis of Azide-functionalized TFC polyamide membrane by interfacial polymerization of m-phenylenediamine (MPD), trimesoyl chloride (TMC) and Azide-functionalized acid chloride monomer (III) on microporous polysulfone substrate.

The polysulfone microporous substrate is immersed in an aqueous solution of MPD (2% wt) for 2 minutes. Then the excess solution is drained off the surface and an organic solution containing a mixture of TMC and of azide-functionalized acid chloride (III) (1:1, 1:3 or 1:9; 0.1% wt) in hexane is poured onto the soaked polysulfone surface and allowed to react during 10 seconds. The film is dried with a hot air flow, washed thoroughly with distilled water and dried under vacuum at 60°C for 12 hours. FTIR ATR analyses: νₘₐₓ/cm⁻¹ = 3328, 2964, 2925, 2872, 2103, 1663, 1609, 1583, 1544, 1502, 1485, 1412, 1386, 1364, 1322, 1293, 1235, 1168, 1147, 1103, 1076, 1012, 872, 852, 830, 794, 765, 735, 714, 688, 663, 636.

### Example 4: Synthesis of Azide-functionalized TFC polyamide membrane by interfacial polymerization of m-phenylenediamine (MPD), trimesoyl chloride (TMC) and Azide-functionalized acid chloride monomer (III) on microporous poly(ether sulfone) membrane.

The poly(ether sulfone) microporous substrate is immersed in an aqueous solution of MPD (2% wt) for 2 minutes. Then the excess solution is drained off the surface and an organic solution containing a mixture of TMC and of azide-functionalized acid chloride (III) (1:1, 1:3 or 1:9; 0.1% wt) in hexane is poured onto the soaked poly(ether sulfone) surface and allowed to react during 10 seconds. The film is dried with a hot air flow, washed thoroughly with distilled water and dried under vacuum at 60°C for 12 hours. FTIR ATR analyses: νₘₐₓ/cm⁻¹ = 3326, 2923, 2874, 2105, 1659, 1608, 1576, 1541, 1485, 1414, 1321, 1297, 1237, 1148, 1103, 1071, 1011, 871, 859, 835, 796, 733, 717, 698, 627. XPS analysis: C 69.2%, O 16.4%, N 14.4%.

### Example 5: General procedure for the click coupling between azide-functionalized TFC polyamide membranes and alkynyl end-capped PEG.

A K₂SO₄ saturated aqueous solution of alkynyl end-capped PEG (8.10⁻³ mol.L⁻¹), copper (II) sulfate pentahydrate (0.4 equiv.) and (+)-sodium L-ascorbate (1 equiv.) is prepared. The azide functionalized membrane (2 cm² per 3 mL of solution) is immersed in this solution at the temperature required (20 to 60°C) and for the time needed (1 to 5 hours). The film is then washed thoroughly with water several times and a last time with ethanol, and then dried with streaming nitrogen for 2 minutes. FTIR ATR analyses of membranes clicked at 60°C for 5 hours: νₘₐₓ/cm⁻¹ = 3328, 2872, 1730, 1672, 1609, 1584, 1542, 1502, 1486, 1412, 1386, 1360, 1342, 1322, 1293, 1237, 1168, 1147, 1101, 1012, 963, 872, 852, 832, 794, 765, 735, 714, 689,663,636.

## Claims

1. A method for the preparation of a functionalized thin film composite polyamide membrane on a microporous substrate comprising carrying out on the microporous substrate a polycondensation reaction of
a) an aromatic amine with at least two amine functionalities; with
b) an aromatic acyl halide with at least 3 -C(O)Cl groups; and
c1) an additional aromatic amine with at least two amine functionalities which carries at least one azide (N₃) substituent or/and
c2) an additional aromatic amine with at least two amine functionalities which carries at least one alkyne substituent; or
d1) an additional aromatic acyl halide with at least 2 -C(O)Cl groups which carries at least one azide (N₃) substituent or/and
d2) an additional aromatic acyl halide with at least 2 -C(O)Cl groups which carries at least one alkyne substituent.

2. A method for the preparation of a functionalized thin film composite polyamide membrane on a microporous substrate comprising carrying out on the microporous substrate a polycondensation reaction of
a) an aromatic amine with at least two amine functionalities; with
b) an aromatic acyl halide with at least 3 -C(O)Cl groups; and
d1) an additional aromatic acyl halide with at least 2 -C(O)Cl groups which carries at least one azide (N₃) substituent or/and
d2) an additional aromatic acyl halide with at least 2 -C(O)Cl groups which carries at least one alkyne substituent.

3. A method according to claim 1 or 2 wherein the microporous substrate is a polymer selected from the group consisting of a polysulfone, polycarbonate, polypropylene, polyamide and poly(ether sulfone).

4. A method according to claim 1 or 2 for the preparation of a functionalized thin film composite polyamide membrane on a microporous substrate which comprises carrying out on the microporous substrate a polycondensation reaction of
a) an aromatic amine of formula (I) 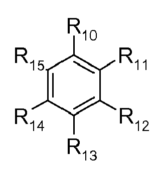 wherein at least two of R₁₀ - R₁₅ are -NH₂ and the others are independently hydrogen or C₁-C₄alkyl; with
b) an aromatic acyl halide of formula (II) 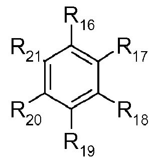 wherein at least 3 of R₁₆ -R₂₁ are a
group -C(O)Cl and the others are independently hydrogen or C₁-C₄alkyl; in the presence of d1) an azide-functionalized aromatic acyl chloride of formula (III) 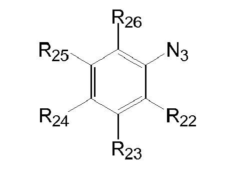 or/and
d2) an alkyne-functionalized aromatic acyl chloride of formula (IV) 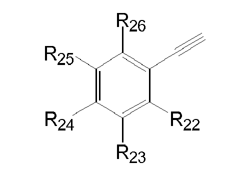 wherein at least 2 of R₂₂ -R₂₆ are a group -C(O)Cl and the others are independently hydrogen or C₁-C₄alkyl.

5. A method according to any of the preceding claims wherein the alkyne functionalized or azide fuctionalized aromatic acyl chloride is
5-(Azidomethyl)isophthaloyl dichloride 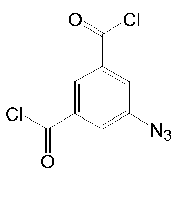 ; or
5-(Ethynyl)isophthaloyl dichloride

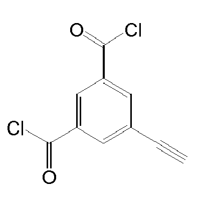

6. A method according to any of the preceding claims wherein the weight ratio of aromatic acyl halide with at least 3 -C(O)Cl groups to alkyne functionalized or azide fuctionalized aromatic acyl chloride is from 1:1 to 9:1.

7. A method for the modification of a functionalized thin film composite polyamide membrane on a microporous substrate according to any of the preceding claims comprising using a click coupling reaction.

8. A method according to claim 7 wherein for the click coupling reaction polymers with anti-fouling properties or biologically active molecules, end-functionalized with either an azide or an alkyne function are used.

9. A method according to claims 7 or 8 wherein an alkyne functionalized poly(ethylene glycol) (PEG) of molecular weight in the range 2,000 to 5,000 Da is used.

10. A method according to claim 7 wherein the click coupling reaction is carried out by dipping the functionalized membrane of claims 1 to 6 into a solution of the appropriate functionalized anti-fouling polymer.

11. A method according to claim 10 wherein the clickable membrane is immersed in an aqueous solution of the appropriate functionalized anti-fouling polymer, at a concentration of 1.10⁻² to 1.10⁻³ mol.L⁻¹.

12. A functionalized thin film composite polyamide membrane on a microporous substrate comprising on the microporous substrate a polycondensate prepared from
a) an aromatic amine with at least two amine functionalities; with
b) an aromatic acyl halide with at least 3 -C(O)Cl groups; and
c1) an additional aromatic amine with at least two amine functionalities which carries at least one azide (N₃) substituent or/and
c2) an additional aromatic amine with at least two amine functionalities which carries at least one alkyne substituent; or
d1) an additional aromatic acyl halide with at least 2 -C(O)Cl groups which carries at least one azide (N₃) substituent or/and
d2) an additional aromatic acyl halide with at least 2 -C(O)Cl groups which carries at least one alkyne substituent.

13. A functionalized thin film composite polyamide membrane on a microporous substrate comprising on the microporous substrate a polycondensate prepared from
a) an aromatic amine with at least two amine functionalities; with
b) an aromatic acyl halide with at least 3 -C(O)Cl groups; and
d1) an additional aromatic acyl halide with at least 2 -C(O)Cl groups which carries at least one azide (N₃) substituent or/and
d2) an additional aromatic acyl halide with at least 2 -C(O)Cl groups which carries at least one alkyne substituent.

14. A modified functionalized thin film composite polyamide membrane on a microporous substrate prepared by a click coupling reaction from the membrane according to claims 12 or 13.

15. Use of a click reaction between an azide and an alkyne for the modification of thin film composite polyamide membranes on a microporous substrate.
